# EUROPÄISCHE PATENTANMELDUNG

(11) **EP 2 607 738 A2**
(43) Veröffentlichungstag der Anmeldung: **26.06.2013**
(21) Anmeldenummer: 12007084.2
(22) Anmeldetag: 12.10.2012
(51) Int. Cl.: F16F 1/38, F16F 1/387

(54) **Elastische Pendelstütze**

(30) Priorität: 23.12.2011 DE 102011122274
(71) Anmelder: Anvis Deutschland GmbH, 36396 Steinau an der Strasse (DE)
(72) Erfinder: Lifka, Oliver, 36396 Steinau an der Straße (DE); Bacher, Georg, 63637 Jossgrund (DE)
(74) Vertreter: Schmid, Nils T.F.

(57) **Zusammenfassung**

Bei einer elastischen Pendelstütze für einen Kraftfahrzeugmotor, insbesondere für einen E-Motor und/oder einen Verbrennungsmotor, eines Kraftfahrzeugs, umfassend eine starre Tragstruktur, die eine Längsrichtung definiert, ein erstes bzw. zweites durch die Tragstruktur verbundenes Schwenklager zum Befestigen an den Kraftfahrzeugmotor bzw. an die Karosserie des Kraftfahrzeugs, wobei das erste Schwenklager in einem sich in Längsrichtung erstreckenden Abstand zum zweiten Schwenklager angeordnet ist und wenigstens eines der Schwenklager, vorzugsweise beide Schwenklager, eine durch einen Abschnitt der Tragstruktur gebildete Außenbuchse, ein von der Außenbuchse umgebenden Lagerkern, über den die Pendelstütze an den Kraftfahrzeugmotor oder die Karosserie befestigbar ist, und eine Federanordnung aufweist, über die sich der Lagerkern schwingfähig an der Außenbuchse abstützt, ist vorgesehen, dass die Federanordnung derart ausgelegt ist, dass die Federsteifigkeit der Pendelstütze in der Längsrichtung der Tragstruktur höher als in Querrichtung ist.

## Beschreibung

Die Erfindung betrifft eine elastische Pendelstütze zum elastischen Lagern eines Kraftfahrzeugmotors, insbesondere eines E-Motors. Eine Pendelstütze hat eine Längsausdehnung, die im eingebauten Zustand der Pendelstütze in Fahrtrichtung des Kraftfahrzeugs liegt. Dabei kann der Kraftfahrzeugmotor an der Pendelstütze über das mit dem Kraftfahrzeug starr verbundene Getriebe gekoppelt sein.

Eine bekannte elastische Pendelstütze für einen Kraftfahrzeugmotor hat eine starre Tragstruktur, die beispielsweise als Tragrahmen aus Leichtmetall, wie Aluminium, gebildet ist. Aus EP 0 647 787 A1 ist ein elastisches Lager bekannt, bei dem der Tragrahmen durch ein Leichtmetallprofilteil gebildet ist. Die elastische Pendelstütze hat zwei Schwenklagerbuchsen, die jeweils eine Außenbuchse aufweisen und eine Schwenkachse definieren. Die Außenbuchse umgibt eine Lageraufnahme oder einen Lagerkern, über den jeweils der Kraftfahrzeugmotor und die Karosserie, insbesondere ein quer zur Fahrtrichtung verlaufender Hilfsträger der Karosserie, an der Pendelstütze befestigbar ist. Die Schwenklagerbuchsen haben weiterhin eine Federanordnung, über die sich der Lagerkern schwingfähig an der Außenbuchse des Schwenklagers abstützen kann. Die starre Tragstruktur definiert eine Längsrichtung, entlang der sich der kürzeste Abstand zwischen den beiden Schwenklagerbuchsen erstreckt. Eine der Schwenklagerbuchsen hat einen Elastomerkörper mit zwei sich diametral gegenüberliegenden Elastomersäulen, die sich in einer zur Längsrichtung oder Längsausdehnung der Pendelstütze senkrecht stehenden Querrichtung erstrecken.

Es zeigte sich, dass derartige elastische Pendelstützen auf die Betriebseigenschaften von Verbrennungsmotoren dahingehend zufriedenstellend abgestimmt sind, dass bei Leerlauflast eine akustische Entkopplung zwischen dem Verbrennungsmotor und der Karosserie bereitgestellt wird, indem die Schwenklagerbuchse im Niederfrequenzbereich eine möglichst niedrige Steifigkeit aufweist. Im betriebsgemäßen Lastbereich sollte eine möglichst hohe Steifigkeit wirken. Es zeigte sich, dass Kraftfahrzeugmotoren immer höhere Drehmomente erreichen können und diese selbst beim Anfahren des Kraftfahrzeugs in kürzester Zeit sprunghaft bereitstehen. Aufgrund der hohen schlagartig zur Verfügung stehenden Drehmomente können höhere Schwingungsamplituden an der Pendelstütze entstehen, welche unter anderem zu einer starken Belastung des Elastomerfedermaterials führen kann.

Es ist Aufgabe der Erfindung, die Nachteile des gattungsgemäßen Stands der Technik zu überwinden, insbesondere eine elastische Pendelstütze für einen Kraftfahrzeugmotor, insbesondere einen E-Motor, bereitzustellen, mit der ein stetiger und differenzierbarer Steifigkeitsverlauf erreicht werden kann, insbesondere eine Abstimmung der Steifigkeit der Pendelstütze hinsichtlich der Charakteristik der Drehmomentkurve des Motors optimiert ist.

Diese Aufgabe wird durch die Merkmale von Patentanspruch 1 gelöst. Danach ist eine elastische Pendelstütze für einen Kraftfahrzeugmotor, insbesondere für einen Elektromotor, eines Kraftfahrzeugs vorgesehen. Die erfindungsgemäße Pendelstütze hat die Eigenschaft insbesondere einen Elektromotor schwingfähig zu lagern und einen stetigen und damit differenzierbaren Stetigkeitsverlauf zu bieten. Dieser Vorteil wird vor allem dann genutzt, wenn der Kraftfahrzeugmotor, wie der Elektromotor, eine möglichst gleichmäßige, wie rechteckige, Drehmomentkurve leistet. Bei einem Elektomotor liegt bereits beim Anfahren das maximale Drehmoment vor. Aufgrund der erfindungsgemäßen Pendelstütze wird eine diesbezüglich optimale weiche Abstimmung der Pendelstütze in Kraftfahrzeugrichtung oder Längsrichtung der Pendelstütze realisiert, um ein Schlagen oder Ruckeln im Fahrzeug zu verhindern. Bei jedem Lastwechsel des Elektromotors ist die erfindungsgemäß weiche Abstimmung in Längsrichtung der Pendelstütze bzw. in Fahrtrichtung gewährleistet. Die erfindungsgemäße Pendelstütze kann auch bei Verbrennungsmotoren eingesetzt werden, deren Drehmomentkurve im Gegensatz zu einem Elektromotor allmählich ansteigt und einen ausgeprägten schlagartigen Krafteintrag realisiert. Allerdings ist auch bei modernen Verbrennungsmotoren ein stark ausgeübter Lastwechsel realisiebar, der durch die erfindungsgemäße weiche Abstimmung in Fahrtrichtung bzw. in Längsrichtung der Pendelstütze ausgeglichen werden kann. Die erfindungsgemäße elastische Pendelstütze hat eine Tragstruktur, die eine Längsrichtung definiert sowie eine erstes und ein zweites durch die Tragstruktur verbundenes Schwenklager zum Befestigen an dem Kraftfahrzeugmotor bzw. an der Karosserie des Kraftfahrzeugs aufweist. Die Tragstruktur kann auch als Tragrahmen ausgeführt sein, bei der wenigstens eine starre Kopplungsstrebe zwei Außenarmaturen der beiden Schwenklager miteinander verbindet. Das erste und/oder zweite Schwenklager können insbesondere jeweils als Schwenklagerbuchse ausgeführt sein, bei dem ein starrer Lagerkern von der starren Außenarmatur kontaktlos umgeben ist, wobei die beiden starren Lagerkerne innerhalb der Außenarmatur durch einen Elastomerkörper schwingfähig gelagert sind. Das erste Schwenklager ist in einem sich in Längsrichtung erstreckenden Abstand zum zweiten Schwenklager angeordnet. Die Längsrichtung der Pendelstütze wird vorzugsweise durch die Längserstreckung der Tragstruktur und/oder der Pendelstütze oder durch den kürzesten Abstand der Schwenklager festgelegt. Die Längsrichtung erstreckt sich im eingebauten Zustand der Pendelstütze in Fahrtrichtung des Kraftfahrzeugs. Wenigstens eines der Schwenklager, vorzugsweise beide Schwenklager, hat eine durch einen Abschnitt der Tragstruktur gebildete Außenarmatur oder -buchse, den von der Außenbuchse umgebenden Lagerkern, über den die Pendelstütze an den Kraftfahrzeugmotor oder die Karosserie befestigbar ist, und eine Federanordnung, über die sich der Lagerkern schwingfähig an der Außenbuchse abstützt. Erfindungsgemäß ist die Federanordnung derart ausgelegt, dass die Federsteifigkeit der Pendelstütze in Längsrichtung höher als in Querrichtung ist. Mit der erfindungsgemäßen Maßnahme wird überraschenderweise die elastische Pendelstütze auf die besondere Kennlinie des Drehmomentverlaufs eines Elektromotors eines Kraftfahrzeugs optimal abgestimmt. Insbesondere ist die erfindungsgemäße Pendelstütze in Längsrichtung mit einer hohen Grundsteifigkeit von bis zu über 400 N/mm ausgestattet. Mit der erfindungsgemäßen Pendelstütze ist ein stetiger und differenzierbarer Steifigkeitsverlauf beispielsweise durch bestimmtes konstruktive Maßnahmen, wie Materialwahl, Einbebringung von Versteifungshülsenteilen, einstellbar. Es zeigte sich, dass mit der erfindungsgemäßen Maßnahme eine optimale weiche Abstimmung beispielsweise auf den rechteckigen Drehmomentkurvenverlauf des Motors erreicht werden kann.

Bei einer bevorzugten Ausführung der Erfindung ist die Federanordnung insbesondere ausschließlich durch einen Elastomerkörper gebildet. Um eine hohe Federsteifigkeit der Pendelstütze in Längsrichtung zu gewährleisten, hat der Elastomerkörper zwischen dem Lagerkern und der Außenbuchse im Querrichtungsbereich eine oder mehrere Elastomermaterialaussparungen, wodurch die Steifigkeit der Pendelstütze in Querrichtung Q reduziert ist, während die Steifigkeit der Pendelstütze in Längsrichtung erhalten bleibt. Vorzugsweise sind die eine oder mehreren Aussparungen in Querrichtung diametral, vorzugsweise achsensymmetrisch zu einer Längsrichtungsachse angeordnet und/oder liegen sich paarweise im wesentlichen identisch geformt gegenüber. Die jeweilige Aussparung kann insbesondere innenumfänglich außer durch den Elastomerkörper auch durch einen in Querrichtung liegenden Endabschnitt des Lagerkems, insbesondere zumindest durch eine in Querrichtung Q ragende Nase des Lagerkems, und durch einen Innenseitenbereich der Außenbuchse begrenzt sein. Es sei klar, dass die Begrenzungsfläche zur Aussparung nicht notwendigerweise durch das Material des Lagerkerns oder der Außenbuchse realisiert sein soll. Aus fertigungstechnischen und Korrosionsvermeidungsgründen kann es angebracht sein, sowohl den Lagerkern in dem Bereich des Endabschnitts als auch in Innenseitenbereich der Außenbuchse mit einer dünnen Elastomerüberzugsschicht zu bedecken, was beim Spritzen des Elastomerkörpers in einem Verfahrensschritt erreichbar ist. Vorzugsweise erstreckt sich die jeweilige Aussparung innenumfänglich um mehr als 40° oder 60°, vorzugsweise zwischen 80° und 100°.

Bei einer Weiterbildung der Erfindung ist die Federanordnung durch einen Elastomerkörper gebildet, der durch wenigstens zwei sich vorzugsweise diametral und/oder achsensymmetrisch zu einer Querrichtungsachse von dem Lagerkern zu einer Innenseite der Außenbuchse erstreckenden Elastomerlängsstrebe gebildet sind. Eine Elastomerlängsstrebe oder -arm hat eine Haupterstreckungsrichtung. Vorzugsweise besteht der Elastomerkörper ausschließlich aus wenigstens zwei Elastomerlängsstreben. Die Elastomerlängsstrebe kann in Form einer Säule ausgebildet sein, deren Breite vorzugsweise in Längs- und Querrichtungsschnitt ausgehend von dem Lagerkern zur Innenseite der Außenhülse insbesondere stetig zunimmt.

Bei einer bevorzugten Ausführung der Erfindung belegt jede Elastomerlängsstrebe mehr als 45° und weniger als 120°, vorzugsweise zwischen 80° und 100°, eines Vollumfangs der Außenbuchse.

Bei einer Weiterbildung der Erfindung ist in wenigstens einer der Elastomerlängsstreben eine in deren Elastomermaterial eingebettete Versteifung aufgenommen. Die Versteifung kann beispielsweise als Hülsenabschnitt mit einem Umfang von vorzugsweise 90° bis 110° gebildet sein. Die Krümmung des Hülsenabschnitts entspricht vorzugsweise im wesentlichen der Krümmung der dazu benachbarten Innenseite der Außenbuchse des Schwenklagers.

Bei einer bevorzugten Ausführung der Erfindung sind die Versteifungen in jeder Elastomerlängsstrebe achsensymmetrisch zu einer Querrichtungsachse angeordnet.

Bei einer bevorzugten Ausführung der Erfindung ist die Federanordnung durch wenigstens ein Paar Elastomerlängsstreben gebildet, die sich hauptsächlich in Längsrichtung erstrecken. Die Elastomerlängsstreben erstrecken sich diametral von dem Lagerkern zur Außenbuchse in Längsrichtung. Im montierten Zustand der Pendelstütze können die Elastomerlängssteben gleichmäßig auf Druck vorgespannt sein und stützen sich an der Außenarmatur und dem Lagerkem gegenseitig ab.

Bei einer Weiterbildung der Erfindung hat das wenigstens eine Pendellager eine im wesentlichen Längsrichtung lineare Führung für den Lagerkern relativ zur Außenarmatur. Vorzugsweise ist die Führung durch einen im wesentlichen geradlinigen Abschnitt des Innenumfangs der Außenbuchse, insbesondere durch zwei sich in Querrichtung diametral gegenüberliegende geradlinige Abschnitte des Innenumfangs der Außenbuchse, gebildet. Um eine Führung in Längsrichtung zu realisieren, wirken die geradlinigen Führungsabschnittsflächen mit einer jeweiligen in Querrichtung ragenden Nase des Lagerkerns derart zusammen, dass ein Ausweichen des Lagerkerns in Querrichtung im wesentlichen verhindert ist. Ein Ausweichen in Querrichtung Q ist nur insofern möglich, als ein kleiner Spielspalt zwischen der Nase und der Führungsfläche in Querrichtung Q für eine Bewegungsfreiheit konstruktive vorgesehen ist.

Bei einer Weiterbildung der Erfindung hat die Linearführung wenigstens einen Anschlag zum Begrenzen einer Bewegung des Lagerkerns hauptsächlich in Längsrichtung relativ zur Außenbuchse. Vorzugsweise hat jeder Anfangsabschnitt der Linearführung zwei sich in Längsrichtung gegenüber liegende, insbesondere radial nach innen vorstehende Absätze. Die Absätze legen eine Bewegungsamplitude des Lagerkerns in Längsrichtung fest. Über die Absätze hinaus kann der Lagerkern nicht verschoben werden.

Die Absätze sind derart dimensioniert, dass sie mit der jeweiligen Nase des Lagerkerns bewegungsbegrenzend zusammenwirken können.

Bei einer bevorzugten Ausführung der Erfindung verlaufen die Schwenkachsen der beiden Schwenklager windschief und zueinander senkrecht. Damit ist eine Bauraum optimierte Anordnung möglich.

Zur optimalen Abstimmung der Steifigkeit der Federanordnung im Hinblick auf die Kennlinie des einzusetzenden Motors kann das Elastomermaterial mit einer Shorehärte versehen sein, die unter 45 Shore A, vorzugsweise zwischen 40 und 43 Shore A gewählt ist.

Weitere Eigenschaften, Vorteile und Merkmale der Erfindung werden durch die folgende Beschreibung einer bevorzugten Ausführung bevorzugter Ausführungen der Erfindung anhand der beiliegenden Zeichnungen deutlich, in denen zeigen:
- Figur 1: eine Seitenansicht einer teilweise montierten elastischen Pendelstütze in einer ersten Ausführung;
- Figur 2: eine Teilseitenansicht einer erfindungsgemäßen elastischen Pendelstütze in einer zweiten Ausführung;
- Figur 3: eine Teilseitenansicht einer erfindungsgemäßen elastischen Pendelstütze in einer dritten Ausführung; und
- Figur 4: eine Teilseitenansicht einer erfindungsgemäßen Pendelstütze in einer vierten Ausführung.

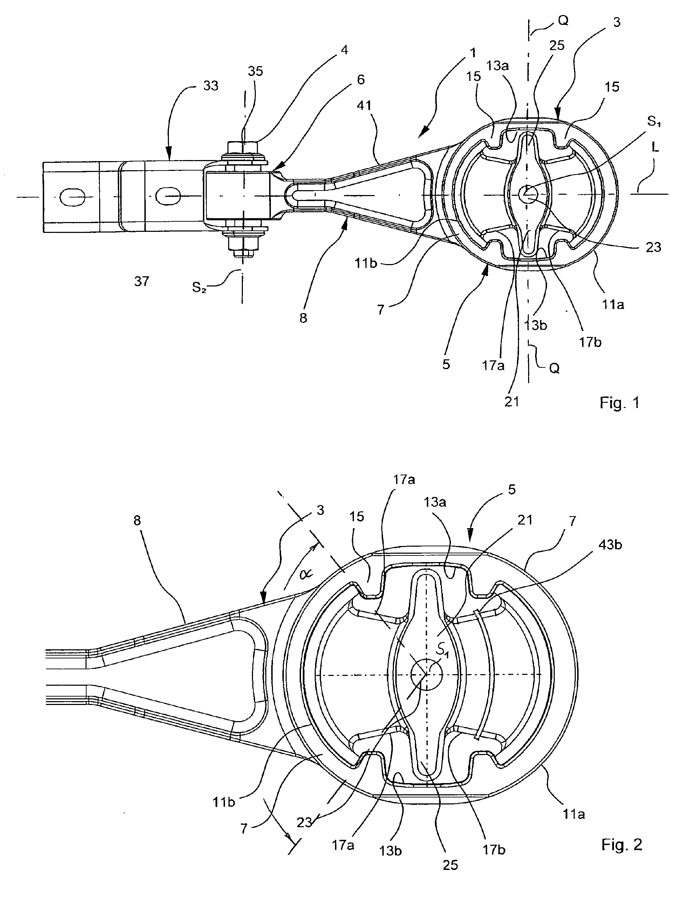

In Figur 1 ist eine erfindungsgemäße elastische Pendelstütze zum elastischen Koppeln eines Elektromotors an eine Kraftfahrzeugkarosserie (beide nicht dargestellt), wobei der Kraftfahrzeugmotor vorteilhafter eine im wesentlichen rechteckige Drehmomentkurve aufweist, im allgemeinen mit der Bezugsziffer 1 versehen.

Die elastische Pendelstütze 1 umfasst als Hauptkomponenten: eine erste Schwenklagerbuchse 5, eine zweite Schwenklagerbuchse 6 sowie einen starren Tragrahmen 3 insbesondere aus Kunststoff oder Leichtmetall, wie Aluminium.

Der Tragrahmen 3 besteht im wesentlichen drei Hauptkomponenten, nämlich aus zwei Außenhülsen 4 bzw. 7 einer ersten 5 und zweiten Schwenklagerbuchse 6 sowie einer die starren Außenhülsen 4, 7 miteinander verbindenden Längstrebe 8, wobei die beiden Außenhülsen 4, 7 sowie die Längsstrebe 8 aus einem Kunststoffteil oder Metallteil gefertigt sind. Die erste Schwenklagerbuchse 5 der Pendelstütze 1 dient zur Anbindung an den nicht dargestellten Elektromotor eines PKWs. Die erste Schwenklagerbuchse 5 der Pendelstütze 1 hat neben der Außenhülse 7 einen Elastomerkörper sowie eine starre Lageraufnahme, wobei die beiden letzteren später erläutert werden. Die Außenhülse 7 der Schwenklagerbuchse 5 ist außenumfänglich im wesentlichen zylindrisch. Am Innenumfang hat die Außenhülse 7 ein punktsymmetrisches Profil. Im übrigen ist der Gesamtaufbau der Schwenklagerbuchse 5 punktsymmetrisch zur Schwenkachse S₁ ausgeführt.

Der Innenumfang der Außenhülse 7 umfasst zwei sich gegenüber liegende, im wesentlichen identisch geformte Teilzylinderabschnitte 11a, 11b, die sich im wesentlichen konzentrisch zur Schwenklagerachse S₁ der Schwenklagerbuchse 5 erstrecken. Des weiteren erstrecken sich Teilzylinderabschnitt 11a, 11b längs des Innenumfangs zylindrisch um etwa 90° bis 100°, wobei der Ersteckungswinkel in Figur 2 mit dem Winkel α angedeutet ist.

Ein Führungsabschnitt 13a, 13b des Innenumfangs ist im wesentlichen geradlinig flächig ausgeführt. Dieser Führungsabschnitt 13a, 13b erstreckt sich im wesentlichen geradlinig in Längsrichtung L und Axialrichtung S₁ oder hat eine nur geringfügige Krümmung zur Schwenkachse S₁.

Beide Innenumfangsabschnitte 11a, 11b und 13a, 13b sind jeweils durch eine radial nach innen ragende Nase 15 voneinander getrennt, die als Anschlag zur Bewegungsbegrenzung in Längsrichtung L dient.

Des weiteren hat die erste Schwenklagerbuchse 5 zur Bildung des Elastomerkörpers ein Paar sich von den Teilzylinderabschnitten 11a, 11b in Längsrichtung L weg erstreckenden Elastomersäulen oder -stollen 17a, 17b. Die Elastomersäulen 17a, 17b erstrecken sich überwiegend in Längsrichtung L von der Innenseite der Außenhülse 7 weg. Die Breite in der Elastomersäule 17a, 17b in Querrichtung Q nimmt allmählich geringfügig in Längsrichtung L ausgehend von der Außenarmatur 7 ab. Die Elastomersäulen 17a, 17b sind aus einem Elastomermaterial gebildet, dessen Shorehärte kleiner 45 Shore A, insbesondere zwischen 40 und 43 Shore A ist. Die außenhülsenseitigen Enden der Elastomersäulen 17a, 17b bedecken im wesentlichen vollflächig die jeweiligen Teilzylinderabschnitte 11a, 11b der Außenhülse 7.

Die Elastomersäulen 17a, 17b dienen dazu, eine im wesentlichen scheibenförmige Lageraufnahme oder Lagerkern 21 hauptsächlich in Längsrichtung L abzustützen, der ein Loch 23 zur Aufnahme eines Bauteils des Elektromotors aufweist. Das Loch 23 definiert die Schwenkachse S₁. Der scheibenförmige Lagerkern 21 hat einen bauchigen Mittelabschnitt, an dem sich die jeweilige Elastomersäule 17a, 17b abstützt. Die freiliegenden Endbereiche 25 sind in Längsrichtung L schmäler als der Rest des Lagerkerns 21 ausgebildet.

Die Längsabmessung des Lagerkerns 21 in Querrichtung Q ist geringfügig kleiner als der kürzeste Abstand der sich gegenüber liegenden Führungsabschnitte 13a, 13b in Querrichtung Q. Auf diese Weise ist sichergestellt, dass der Lagerkern 21, insbesondere dessen Aufnahmeloch nur in Längsrichtung L verschieblich ist und ein Auslenken in Querrichtung Q vermieden ist. Insbesondere kann ein Spalt in Querrichtung zwischen den Enden 25 und den Führungsabschnitten 13a, 13b von wenigen Millimetern dimensioniert sein.

Die Enden 25 des Lagerkerns 21 wirken bewegungsbegrenzend mit den Nasen 15 zusammen.

Die Elastomersäulen 17a, 17b sind gegeneinander auf Vorspannung gebracht, so dass auch im unmontierten Zustand der Pendelstütze 1 eine Vorspannung im Material der Elastomersäulen herrscht. Auf diese Weise wird erreicht, dass die für das Material schädlichen Zugspannungen im Betrieb selbst bei Spitzenlasten vermieden sind.

Mit der besonderen Profilierung des Innenumfangs der Außenhülse 7 sowie des scheibenförmigen Lagerkerns 21 ist gewährleistet, dass eine Führungsbeweglichkeit sowie eine hohe Grundsteifigkeit in Längsrichtung L sichergestellt ist, wobei die Bewegungsamplitude des Lagerkerns 21 durch den Abstand der Nasen 15 in Längsrichtung L festgelegt ist. Für die Grundsteifigkeit in Fahrtrichtung können über 400N/mm erreicht werden.

Wie in Figur 1 ersichtlich ist, erstreckt sich der Tragrahmen 3, insbesondere die Längsstrebe 8, in Querrichtung Q verjüngend von der Außenhülse 7 der Schwenklagerbuchse 5 hin zu der zweiten Schwenklagerbuchse 4, deren Durchmesser deutlich kleiner als, vorzugsweise halb so groß wie, der der Schwenklagerbuchse 5 ist. An der zweiten Schwenklagerbuchse 4 ist ein Karosserieteil 33 über einen Bolzen 35 befestigt, der nicht Teil der erfindungsgemäßen Pendelstütze 1 sein muss.

Die Schwenklagerbuchse 4 definiert eine Schwenkachse S₂, die windschief und senkrecht zur Schwenkachse S₁ der ersten Schwenklagerbuchse 5 ist.

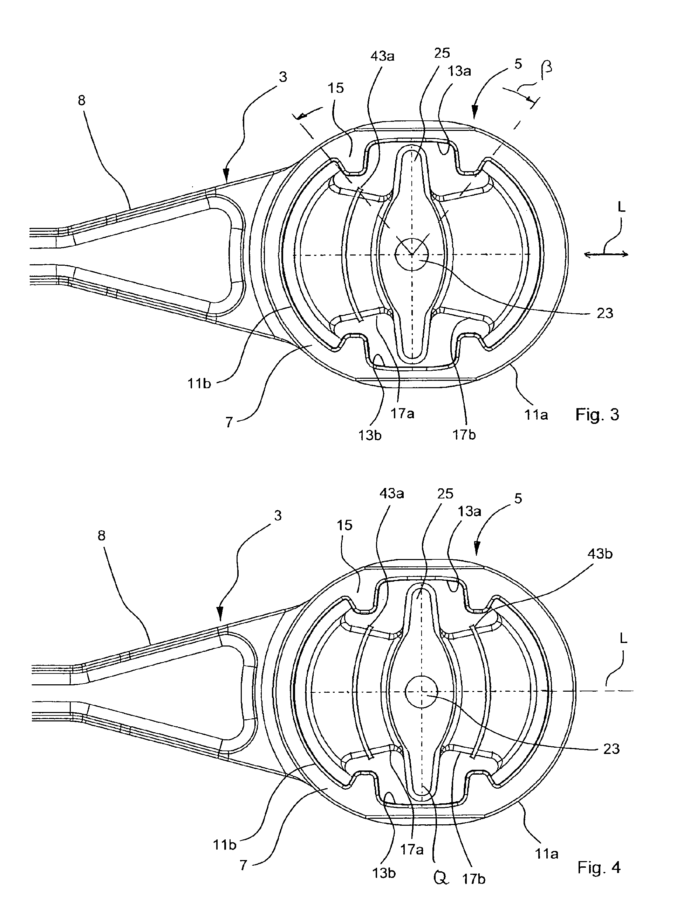

Um die Steifigkeit und die akustische Isolationsfähigkeit der ersten Schwenklagerbuchse 5 in Längsrichtung L einzustellen, kann in einem (Figur 2 und Figur 3) oder beiden (Figur 4) Elastomersäulen 17a, 17b eine ringabschnittsförmige Zwischenarmatur 43a, 43b vorgesehen sein, wobei eine insbesondere gleiche Krümmung der jeweiligen Zwischenarmatur im wesentlichen der Krümmung der Innenabschnitte 11a, 11b des Innenumfangs der Außenhülse 7 entspricht.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: elastische Pendelstütze
- 3: Tragrahmen
- 4, 5: Schwenklagerbuchse
- 6, 7: Außenhülse
- 8: Lagerstrebe
- 11a, 11b: Teilzylinderabschnitt
- 13a, 13b: Führungsabschnitt
- 15: Nase
- 17a, 17b: Elastomersäule
- 21: Lagerkern
- 23: Loch
- 25: Endbereiche
- 33: Karosserieteil
- 35: Bolzen
- 43a, 43b: Zwischenarmatur

- α: Winkel
- L: Längsrichtung
- Q: Querrichtung
- S₁, S₂: Schwenklagerachse

## Patentansprüche

1. Elastische Pendelstütze (1) für einen Kraftfahrzeugmotor, insbesondere für einen E-Motor und/oder einen Verbrennungsmotor, eines Kraftfahrzeugs, umfassend:
- eine starre Tragstruktur, die eine Längsrichtung (L) definiert,
- ein erstes bzw. zweites durch die Tragstruktur verbundenes Schwenklager zum Befestigen an den Kraftfahrzeugmotor bzw. an die Karosserie des Kraftfahrzeugs, wobei das erste Schwenklager in einem sich in Längsrichtung (L) erstreckenden Abstand zum zweiten Schwenklager angeordnet ist und wenigstens eines der Schwenklager, vorzugsweise beide Schwenklager, eine durch einen Abschnitt der Tragstruktur gebildete Außenbuchse, ein von der Außenbuchse umgebenden Lagerkern (21), über den die Pendelstütze (1) an den Kraftfahrzeugmotor oder die Karosserie befestigbar ist, und eine Federanordnung aufweist, über die sich der Lagerkern (21) schwingfähig an der Außenbuchse abstützt, **dadurch gekennzeichnet, dass** die Federanordnung derart ausgelegt ist, dass die Federsteifigkeit der Pendelstütze (1) in der Längsrichtung (L) der Tragstruktur höher als in Querrichtung (Q) ist.

2. Elastische Pendelstütze (1) nach Anspruch 1, **dadurch gekennzeichnet, dass** die Federanordnung durch einen Elastomerkörper gebildet ist, der zwischen dem Lagerkern (21) und der Außenbuchse in Querrichtung (Q) mit einer oder mehreren Aussparrungen versehen ist, die insbesondere sich in Querrichtung (Q) diametral, vorzugsweise achsensymmetrisch zu einer Längsrichtungsachse und/oder paarweise gegenüberliegt/en und/oder die innenumfänglich außer durch den Elastomerkörper auch durch einen in Querrichtung (Q) liegenden Endabschnitt des Lagerkerns (21), insbesondere zumindest durch eine in Querrichtung (Q) ragende Nase (15) des Lagerkerns (21), die vorzugsweise mit einem dünnen Elastomerüberzug bedeckt ist, und durch einen Innenseitenbereich der Außenbuchse, der vorzugsweise mit einem dünnen Elastomerüberzug bedeckt ist und/oder sich innenumfänglich um mehr als 40° oder 60°, vorzugsweise in etwa 80° bis 100° erstreckt, begrenzt ist.

3. Elastische Pendelstütze (1) nach Anspruch 1 oder 2, **dadurch gekennzeichnet, dass** die Federanordnung durch einen Elastomerkörper gebildet ist, der durch wenigstens zwei sich vorzugsweise diametral und/oder achsensymmetrisch zu einer Querrichtungsachse von dem Lagerkern (21) zu einer Innenseite der Außenbuchse erstreckende Elastomerlängsstreben gebildet ist, insbesondere aus diesen besteht, wobei vorzugsweise die Elastomerlängsstreben in Form einer Säule ausgebildet sind, deren Breite im Längs- und Querrichtungsschnitt ausgehend vom Lagerkern (21) zur Innenseite insbesondere stetig zunimmt, und/oder wobei jede Elastomerlängsstrebe mehr als 45° und weniger als 120°, vorzugsweise zwischen 80° und 100°, eines Innenumfangs der Außenbuchse belegt.

4. Elastische Pendelstütze (1) nach Anspruch 3, **dadurch gekennzeichnet, dass** wenigstens eine der Elastomerlängsstreben eine in das Elastomermaterial eingebettete Versteifung aufnimmt, die insbesondere als Hülsenabschnitt ausgebildet ist, dessen Krümmung im wesentlichen der Krümmung der dazu benachbarten Innenseiten der Außenbuchse entspricht, wobei insbesondere Versteifungen in jeder Elastomerlängsstrebe achsensymmetrisch zur Querrichtungsachse angeordnet sind.

5. Elastische Pendelstütze (1) nach einem der vorstehenden Ansprüche, dadurch g e - **kennzeichnet,** dass eine Federanordnung durch wenigstens ein Paar Elastomerlängsstreben gebildet sind, die sich diametral von dem Lagerkern (21) zur Außenbuchse erstrecken, und/oder im unmonierten Zustand der Pendelstütze (1) insbesondere gleichmäßig auf Druck vorgespannt sind und sich an der Außenarmatur (7) und dem Lagerkern (21) abstützen.

6. Elastische Pendelstütze (1) nach einem der vorstehenden Ansprüche, dadurch g e - **kennzeichnet,** dass das wenigstens eine Schwenklager eine im wesentlichen in Längsrichtung (L) lineare Führung des Lagerkerns (21) relativ zur Außenarmatur (7) aufweist, wobei insbesondere die Führung durch einen im wesentlichen geradlinigen Abschnitt des Innenumfangs der Außenbuchse, insbesondere durch zwei sich in Querrichtung (Q) diametral gegenüberliegende geradlinige Abschnitte des Innenumfangs der Außenbuchse, gebildet ist, der/die vorzugsweise mit einer jeweiligen in Querrichtung (Q) ragenden Nase (15) des Lagerkerns (21) derart zusammenwirkt/en, dass ein Ausweichen des Lagerkerns (21) in Querrichtung (Q) verhindert ist.

7. Elastische Pendelstütze (1) nach Anspruch 6, **dadurch gekennzeichnet, dass** die Linearführung wenigstens einen Anschlag zum Begrenzen einer Bewegung des Lagerkerns (21) in Längsrichtung (L) relativ zur Außenbuchse aufweist, wobei insbesondere jeder Innenumfangsabschnitt zwei sich in Längsrichtung (L) gegenüberliegende Absätze aufweist, die eine Bewegungsamplitude des Lagerkerns (21) in Längsrichtung (L) festlegen und/oder mit der jeweiligen Nase (15) des Lagerkerns (21) bewegungsbegrenzend zusammenwirken.

8. Elastische Pendelstütze (1), **dadurch gekennzeichnet, dass** Schwenkachsen der beiden Schwenklager windschief und zueinander senkrecht verlaufen.

9. Elastische Pendelstütze (1), **dadurch gekennzeichnet, dass** für das Elastomermaterial der Federanordnung eine Shorehärte im Bereich von unter 45 Shore A, vorzugsweise zwischen 40 und 43 Shore A, gewählt ist.
